Europäisches Patentamt

European Patent Office

Office européen des brevets

(19)

(11) **EP 0 614 795 B1**

(12) **EUROPÄISCHE PATENTSCHRIFT**

(45) Veröffentlichungstag und Bekanntmachung des Hinweises auf die Patenterteilung:
**08.05.1996 Patentblatt 1996/19**

(51) Int. Cl.$^6$: **B62D 6/00**
// B62D101/00, B62D111/00, B62D113/00

(21) Anmeldenummer: 94103522.2

(22) Anmeldetag: **08.03.1994**

(54) **Verfahren zum Lenken eines Strassenfahrzeugs mit Vorderradlenkung**

Method for steering a road vehicle with front-wheel steering

Procédé pour diriger un véhicule routier à direction sur les roues avant

(84) Benannte Vertragsstaaten:
FR GB IT SE

(30) Priorität: **09.03.1993 DE 4307420**

(43) Veröffentlichungstag der Anmeldung:
**14.09.1994 Patentblatt 1994/37**

(73) Patentinhaber: **DEUTSCHE FORSCHUNGSANSTALT FÜR LUFT- UND RAUMFAHRT e.V.**
**D-51147 Köln (DE)**

(72) Erfinder: **Ackermann, Jürgen, Prof. Dr.**
**D-82211 Herrsching (DE)**

(74) Vertreter: **von Kirschbaum, Albrecht, Dipl.-Ing. Patentanwalt,**
**Hermann Ehlers-Strasse 21A**
**D-82110 Germering (DE)**

(56) Entgegenhaltungen:
**EP-A- 0 309 293      DE-A- 3 734 477**
**DE-A- 4 114 165      DE-C- 4 028 320**
**US-A- 4 828 061**

- **PROCEEDINGS OF THE 31ST IEEE CONFERENCE ON DECISION AND CONTROL, Bd.3, Dezember 1992, TUCSON, US Seiten 2586 - 2589 J. ACKERMANN 'Robust yaw damping of cars with front and rear steering'**

EP 0 614 795 B1

**Beschreibung**

Die Erfindung betrifft ein Verfahren zum Lenken eines Straßenfahrzeugs mit Vorderradlenkung nach dem Oberbegriff des Patentanspruchs.

Bei einer geregelten Lenkung wird der Lenkwinkel nicht allein vom Fahrer über das Lenkrad kommandiert; es werden vielmehr Lenkbewegungen überlagert, die durch Rückführung gemessener Größen der Lenkdynamik entstehen. Voraussetzung ist also eine aktive Lenkung, bei welcher der Lenkwinkel durch einen (hydraulischen oder elektrischen) Motor eingestellt wird. Aktive Lenkungen sind bereits in Versuchsfahrzeugen erprobt worden (siehe z.B. W.Darenberg, Automatische Spurführung von Kraftfahrzeugen, Automobilindustrie 1987, Stn. 155 bis 159).

In aktiven Lenkungen wird der Lenkmotor üblicherweise durch einen Mikroprozessor gesteuert, der in seinem Lenkregelungs-Algorithmus sowohl Sensorsignale als auch die Stellung des Lenkrades (die beispielsweise mit einem Potentiometerabgriff gemessen wird) verarbeitet. Ein Sensor, der sich bereits im serienmäßigen Einsatz in Straßenfahrzeugen befindet, ist ein Vibrationskreisel zur Messung der Giergeschwindigkit (siehe H. Inoue, H. Harada und Y. Yokaya, Allradlenkung im Toyota Soarer, Tagung "Allradlenkung bei Personenwagen", Haus der Technik, Essen, 3.- 4.12.1991).

Eine Lenkdynamik von Straßenfahrzeugen kann durch eine Übertragungsfunktion vom Lenkradwinkel zur seitlichen Beschleunigung der Vorderachse gekennzeichnet werden. Eine solche Lenkübertragungsfunktion wurde durch DE 40 28 320 wesentlich vereinfacht, indem der Einfluß der Gierbewegung auf die Lenkdynamik durch eine Entkopplung ausgeschlossen wurde.

DE-C-40 28 320 offenbart ein Verfahren nach dem Oberbegriff des Anspruchs.

Die verbleibende Lenkdynamik ist jedoch immer noch von der Fahrgeschwindigkeit abhängig, da sich bei allen bekannten Lenkungen die Übertragungsfunktion vom Lenkradwinkel zur seitlichen Beschleunigung der Vorderachse mit der Fahrgeschwindigkeit ändert. Ein Fahranfänger muß diese Änderung der Lenkdynamik mit der Fahrgeschwindigkeit erlernen, und sich daran gewöhnen. Auch einem geübten Fahrer können Fehleinschätzungen unterlaufen.

Aufgabe der Erfindung ist es daher, ein Verfahren zum Lenken eine Straßenfahr zeugs mit Vorderradlenkung zu schaffen, bei welchem die Lenkübertragungsfunktion von der Fahrgeschwindigkeit unabhängig ist. Gemäß der Erfindung ist diese Aufgabe bei einem Verfahren zum Lenken eines Straßenfahrzeug mit Vorderradlenkung nach dem Oberbegriff des Patentanspruchs durch die Merkmale in dessen kennzeichnendem Teil gelöst.

Gemäß der Erfindung basiert die Lösung auf der Rückführung der mit einem Kreisel gemessenen Giergeschwindigkeit auf die Vorderradlenkung gemäß DE 40 28 320 C2 der Anmelderin. Gemäß der Erfindung wird zusätzlich noch ein Beschleunigungsmesser eingesetzt, welcher die Querbeschleunigung der Vorderachse mißt. Solche Beschleunigungsmesser sind bereits in Versuchsfahrzeugen eingesetzt worden (siehe z.B. B. Los, A. Matheis, J.E. Nametz und R.E. Smith, Konstruktion und Entwicklung eines Fahrzeugs mit mikroprozessor-geregelter Allradlenkung, VDI-Bericht Nr. 650, Düsseldorf 1987, Stn. 239 bis 257). Somit gehören die zur Verwirklichung der Erfindung erforderlichen Komponenten zum Stand der Technik.

Nach dem erfindungsgemäßen Regelungsverfahren wird mit einer Rück-führung der Querbeschleunigung auf die Vorderradlenkung eine völlige Unabhängigkeit der Lenkübertragungsfunktion von der Fahrgeschwindigkeit erreicht. Zudem kann durch einen im Regler einstellbaren Koeffizienten die Lage des Pols der Lenkübertragungsfunktion nach Wunsch festgelegt werden. Damit wird dem Fahrer das Lenken erleichtert und somit gleichzeitig ein Beitrag zur Verkehrssicherheit geleistet.

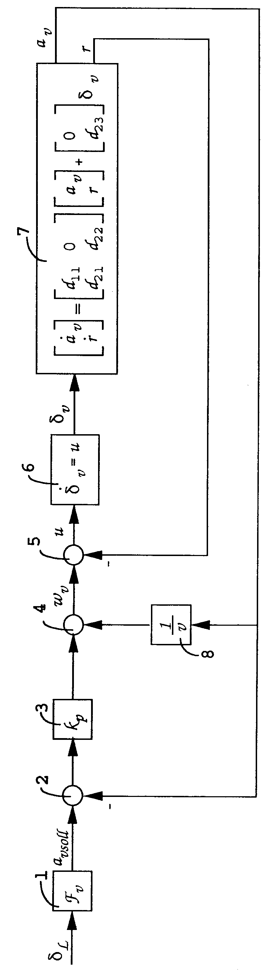

Nachfolgend wird die Erfindung anhand eines in der Figur dargestellten Signal-Flußbildes erläutert, in welchem die Rückführung der Giergeschwindigkeit und der Querbeschleunigung der Vorderachse dargestellt ist.

Zuerst wird die dem erfindungsgemäßen Verfahren zugrundeliegende Theorie wiedergegeben. Hierbei werden die erforderlichen Rechenoperationen des Reglers in einem Mikroprozessor ausgeführt.

In DE 40 28 320 C2 ist die Lenkdynamik eines an den Vorderrädern gelenkten Fahrzeugs einschließlich Lenkmotor durch die folgende in (DE 40 28 320 als Gl. (21) bezeichnete) Zustandsdarstellung angegeben:

$$\begin{bmatrix} \dot{a}_v \\ \dot{r} \\ \dot{\delta}_v \end{bmatrix} = \begin{bmatrix} d_{11} & c & 0 \\ d_{21} & d_{22} & d_{23} \\ 0 & 0 & 0 \end{bmatrix} \begin{bmatrix} a_v \\ r \\ \delta_v \end{bmatrix} + \begin{bmatrix} c \\ 0 \\ 1 \end{bmatrix} u \tag{1}$$

Darin sind die Zustandsgrößen

$a_v$      die Querbeschleunigung der Vorderachse,
r      die Giergeschwindigkeit und
$\delta_v$      der Lenkwinkel der Vorderräder.

Die Eingangsgröße u ist das Eingangssignal für den Lenkmotor. Die Koeffizienten des Modells sind:

2

$$c = c_v \ell / m\ell_h \tag{2}$$

$$d_{11} = -c/v$$

$$d_{21} = (c_h \ell_h - c_v \ell_v)/m\ell_v \ell_h$$

$$d_{22} = -c_h \ell / mv\ell_v$$

$$d_{23} = c_h / m\ell_v$$

Hierbei bedeuten:

| | |
|---|---|
| $c_c(c_h)$ | die Schräglaufsteifigkeit vorn (hinten) |
| $\ell_v(\ell_h)$ | den Schwerpunktsabstand von der Vorder-(Hinter-)Achse |
| $\ell$ | den Radstand ($\ell = \ell_v + \ell_h$) |
| m | die Fahrzeugsmasse (normiert durch den Kraftschluß-Koeffizienten μ) und |
| v | die Fahrgeschwindigkeit. |

In DE 40 28 320 C2 ist ein entkoppelndes Regelgesetz

$$u = w_v - r \tag{3}$$

eingeführt. (Die Führungsgröße $w_v$ ist in DE 40 28 320 C2 als $r_{soll}$ bezeichnet). Wird nunmehr G. (3) in Gl.(1) eingesetzt, so ergibt sich:

$$\begin{bmatrix} \dot{a}_v \\ \dot{r} \\ \dot{\delta}_v \end{bmatrix} = \begin{bmatrix} d_{11} & 0 & 0 \\ d_{21} & d_{22} & d_{23} \\ 0 & -1 & 0 \end{bmatrix} \begin{bmatrix} a_v \\ r \\ \delta_v \end{bmatrix} + \begin{bmatrix} c \\ 0 \\ 1 \end{bmatrix} w_v \tag{4}$$

Durch die damit bewirkte Entkopplung zerfällt das Modell gemäß Gl. (4) in zwei Teilmodelle

$$\dot{a}_v = d_{11} a_v + c w_v \tag{5}$$

und

$$\begin{bmatrix} \dot{r} \\ \dot{\delta}_v \end{bmatrix} = \begin{bmatrix} d_{22} & d_{23} \\ -1 & 0 \end{bmatrix} \begin{bmatrix} r \\ \delta_v \end{bmatrix} + \begin{bmatrix} d_{21} \\ 0 \end{bmatrix} a_v + \begin{bmatrix} 0 \\ 1 \end{bmatrix} w_v \tag{6}$$

Das Teilsystem nach Gl.(6), das die Gierbewegung beschreibt, ist stets stabil. In diesem Zusammenhang sei hier auf die Patentanmeldung EP-A-559114 (Stand der Technik nach Art. 54(3)EPÜ) der Anmelderin der vorliegenden Patentanmeldung verwiesen, in welcher mit Hilfe einer zusätzlichen Lenkung der Hinterräder und einer ganz bestimmten Rückführung der Giergeschwindigkeit auf die Hinterradlenkung die Eigenwerte der Gierbewegung von der Geschwindigkeit unabhängig gemacht und eine gewünschte Dämpfung vorgegeben werden können.

Nachfolgend wird das Teilsystem nach Gl.(5) untersucht, über das der Fahrer die seitliche Führung des Fahrzeugs auf einer Fahrspur bewirkt. Die Querbeschleunigung $a_v$ der Vorderachse und die Fahrgeschwindigkeit v werden gemessen und über das Regelgesetz

$$w_v = k_p(a_{vsoll} - a_v) + \frac{1}{v} a_v \tag{7}$$

auf die Führungsgröße $w_v$ des Systems nach Gl.(5) zurückgeführt. Dabei ist $a_{vsoll}$ die Führungsgröße für die Seitenbeschleunigung $a_v$. Sie wird z.B. durch einen Potentiometerabgriff vom Lenkrad direkt oder über ein Vorfilter gebildet. Der Faktor $k_p$ ist ein frei wählbarer Verstärkungsfaktor.

Wird nun Gl.(7) in Gl.(5) eingesetzt und werden die Werte von $d_{11}$ und c nach Gl.(2) berücksichtigt, so ergibt sich

$$\dot{a}_v = (-c/v - ck_p + c/v) a_v + ck_p a_{vsoll} \tag{8}$$

3

$$\dot{a}_v = ck_p(a_{vsoll} - a_v), \quad c = c_v\ell/m\ell_h$$

Die vorstehende Differentialgleichung (8) ist damit von der Fahrgeschwindigkeit unabhängig geworden. Die zugehörige Übertragungsfunktion verknüpft $a_v(s)$ und $a_{vsoll}(s)$ über die Beziehung

$$a_v(s) = \frac{ck_p}{s + ck_p}\, a_{vsoll}(s) = \frac{1}{1 + \dfrac{m\ell_h}{c_v\ell k_p}s}\, a_{vsoll}(s) \qquad (9)$$

Mit dem vom Fahrer über das Lenkrad erzeugten Signal $a_{vsoll}$ wird also die Querbeschleunigung der Vorderachse über einen Tiefpaß erster Ordnung bewirkt. Die Zeitkonstante dieses Tiefpasses ist

$$T = \frac{m\ell_h}{c_v\ell k_p} \qquad (10)$$

Eine gewünschte Zeitkonstante T kann durch Einstellung von

$$k_p = \frac{m\ell_h}{c_v\ell T}$$

erreicht werden, so daß beispielsweise eine schnelle Reaktion der Lenkung durch Wahl einer kleinen Zeitkonstante T des Tiefpasses sichergestellt werden kann.

Das Zusammenwirken der beiden Rückführungen nach Gl.(3) und Gl.(7) ist durch das in der Figur dargestellte Signalflußbild veranschaulicht.

In dem Signalflußbild wird ein gemessener Lenkradwinkel $\delta_L$ an ein Vorfilter 1 angelegt. Das Ausgangssignal $a_{vsoll}$ des Vorfilters 1 ist dann, wie vorstehend bereits ausgeführt, die Führungsgröße für eine Seitenbeschleunigung $a_v$, die in einem Addierglied 2 subtrahiert wird. Die Zeitkonstante T der Lenkübertragungsfunktion wird in einer mit $k_p$ bezeichneten Einheit 3 eingestellt. In einem weiteren, der Einheit 3 nachgeordneten Addierglied 4 wird dann der mit der Seitenbeschleunigung $a_v$ multiplizierte Reziprokwert der Geschwindigkeit v, d.h. $(1/v) \cdot a_v$ addiert, so daß am Ausgang des Addierglieds 4 die Führungsgröße $w_v$ gemäß Gl.(7) anliegt.

In einem dritten Addierglied 5 wird dann von der Führungsgröße $w_v$ die Giergeschwindigkeit r subtrahiert, so daß am Ausgang des dritten Addierglieds 5 die als Eingangssignal für einen Lenkmotor 6 benötigte Eingangsgröße u erhalten ist. Am Ausgang des integrierend wirkenden Lenkmotors liegt dann die Größe $\delta_v$ an, welche dem Lenkwinkel der Vorderräder entspricht. Der Lenkwinkel $\delta_v$ ist über die Differentialgleichung der Lenkdynamik 7, durch die das reale Fahrzeug beschrieben wird, mit der seitlichen Beschleunigung der Vorderachse $a_v$ sowie der Giergeschwindigkeit r verknüpft.

Die erwähnten Ausgangswerte des Blockes 7 Lenkdynamik in Form der Giergeschwindigkeit r (gemessen mit einem Kreisel) und der Querbeschleunigung Vorderachse $a_v$ (gemessen mit einem Beschleunigungsmesser) werden in der aus der Figur entnehmbaren Weise an die Addierglieder 1 bzw. 3 angelegt.

**Patentansprüche**

1. Verfahren zum Lenken eines Straßenfahrzeugs mit Vorderradlenkung, das einen Radstand $\ell$ (in m), eine vordere Schräglaufsteifigkeit $c_v$ (in N/rad), einen Schwerpunktabstand $\ell_h$ (in m) von der Hinterachse und eine Masse m (in kg) hat, und bei welchem Verfahren die Seitenbeschleunigung $a_v$ (in m/s²) an der Vorderachse, die Fabrgeschwindigkeit v (in m/s), der Lenkradwinkel $\delta_L$ (in rad) und die Giergeschwindigkeit r (in rad/s) gemessen werden und aus dem gemessenen Lenkradwinkel $\delta_L$ in einem Vorfilter ein als Führungsgröße dienendes Ausgangssignal $a_{vsoll}$ gebildet wird, dadurch **gekennzeichnet,** daß
nachdem von dem Ausgangssignal $a_{vsoll}$ des Vorfilters (1) in einem nachgeordneten ersten Addierglied (2) die Seitenbeschleunigung $a_v$ subtrahiert ist, die erforderliche Zeitkonstante T der Lenkübertragungsfunktion durch Einstellen eines Verstärkungsfaktors

$$k_p = \frac{m\ell_h}{c_v\ell T} \text{ (in s/m)}$$

erreicht wird;
in einem zweiten Addierglied (4) ein mit der Seitenbeschleunigung $a_v$ multiplizierter Reziprokwert der Geschwindigkeit v in Form von $(1/v) \cdot a_v$ hinzuaddiert wird, so daß an dem Ausgang des zweiten Addierglieds (4) eine Führungsgröße $w_v$ der entkoppelnden Regelung in der Form

$$w_v = k_p(a_{vsoll} - a_v) + \frac{1}{v}a_v \text{ (in 1/s)}$$

anliegt;
in einem dritten Addierglied (5) durch Subtrahieren der gemessenen Giergeschwindigkeit r von der Führungsgröße $w_v$ eine als Eingangssignal für einen Lenkmotor (6) benötigte Eingangsgröße u und aus dieser eine am Ausgang des integrierend wirkenden Lenkmotors (6) anliegende Größe $\delta_L$ erhalten wird, welche dem Vorderräder-Lenkwinkel entspricht, der wiederum über die Differentialgleichung einer das reale Fahrzeug beschreibenden Lenkdynamik (7) mit der an das erste und zweite Addierglied (2, 4) zur Regelung rückgekoppelten, seitlichen Beschleunigung $a_v$ der Vorderachse und der an das dritte Addierglied (5) rückgekoppelten Giergeschwindigkeit r verknüpft ist, so daß durch eine solche integrierende Rückführung des der Giergeschwindigkeit r entsprechenden Signals auf die Vorderradlenkung die Gierbewegung von der Seitenbewegung der Vorderachse entkoppelt ist.

## Claims

1. A method of steering a road vehicle with front-feel steering, which has a wheel base $\ell$(in m), a front cornering stiffness $c_v$(in N/rad), a centre of gravity distance $\ell_h$ (in m) from the rear axle and a mass m (in kg), and in which method the lateral acceleration $a_v$ (in m/s$^2$) at the front axle, the travelling speed v (in m/s), the steering wheel angle $\delta_L$ (in rad) and the yaw rate r (in rad/s) are measured and an output signal $a_{vsoll}$ serving as command variable is formed from a measured steering angle ($\delta_L$) by a prefilter, characterized in that
after subtracting the lateral acceleration $a_v$ from the output signal $a_{vsoll}$ of the prefilter (1) in a following first adder member (2), the required time constant T of the steering transfer function is achieved by means of setting a gain factor

$$k_p = \frac{m\ell_h}{c_v\ell T} \text{ (in s/m)}$$

the reciprocal of the velocity v multiplied by the lateral acceleration $a_v$ is added in form of $(1/v) \cdot a_v$ in a second adder member (4), so that a command variable $w_v$ of the decoupling control in the form of

$$w_v = k_p(a_{vsoll} - a_v) + \frac{1}{v}a_v \text{ (in l/s)}$$

is applied at the output of the second adder member (4);
by substracting the measured yaw rate r from the command variable $w_v$ in a third adder member (5), an input quantity u required as an input signal for a steering motor (6) is obtained and at the output of the integrating steering motor (6) a quantity $\delta_v$ corresponding to the steering angle of the front wheels is then present which steering angle is linked via the differential equation of steering dynamics (7) by which the real vehicle is described, with the lateral acceleration $a_v$ of the front axle fed back for controlling to the first and second adder members (2, 4) and with the yaw rate r fed back to the third adder member (5), so that by such an integrating feed back of the signal corresponding to the yaw rate r to the front wheel steering, the yaw movement is decoupled from the lateral movement of the front axle.

## Revendications

1. Procédé pour diriger un véhicule routier à roues avant directrices, le véhicule ayant un empattement l (en m), une raideur en trajectoire oblique $c_v$ (en N/radian) à l'avant, une distance $l_h$ (en m) entre le centre de gravité et l'essieu arrière, et une masse m (en kg), procédé selon lequel on mesure l'accélération latérale $a_v$ (en m/s$^2$) au niveau de l'essieu avant, la vitesse de déplacement v (en m/s), l'angle du volant $\delta_L$ (en radians) et la vitesse de lacet r (en radians/s) et on forme dans un préfiltre un signal de sortie $a_{vsoll}$ servant de grandeur de référence, à partir de l'angle du volant $\delta_L$ mesuré,
caractérisé en ce qu'après avoir soustrait, dans un premier circuit additionneur (2), l'accélération latérale $a_v$ du signal de sortie $a_{vsoll}$ du préfiltre (1), on obtient la constante de temps nécessaire T de la fonction de transfert de la direction en appliquant un facteur d'amplification

$$k_p = \frac{ml_h}{c_v lT} \text{ (en s/m)};$$

on ajoute, dans un deuxième circuit additionneur (4), une valeur inverse de la vitesse v multipliée par l'accélération latérale $a_v$, sous la forme $(1/v).a_v$, de telle sorte que l'on dispose à la sortie du deuxième circuit additionneur (4) d'une grandeur de référence $w_v$ de l'asservissement à découplage sous la forme.

$$w_v = k_p(a_{vsoll} - a_v) + \frac{1}{v}a_v \text{ (en 1/s)}$$

on obtient, dans un troisième circuit additionneur (5), une grandeur d'entrée u servant de signal d'entrée pour un moteur de direction (6), en soustrayant la vitesse de lacet r de la grandeur de référence $w_v$, et, à partir de cette

**EP 0 614 795 B1**

grandeur d'entrée, une grandeur $\delta_v$ qui est disponible à la sortie du moteur (6) de direction agissant comme intégrateur et qui correspond à l'angle de braquage des roues avant,
lequel angle étant lui-même lié, à travers l'équation différentielle d'une dynamique de guidage (7) décrivant le véhicule réel, à l'accélération latérale $a_v$ de l'essieu avant qui, pour l'asservissement, est fournie en rétroaction aux premier et deuxième circuits additionneurs (2,4) et à la vitesse de lacet r qui est fournie en rétroaction au troisième additionneur (5), de telle sorte que par ce type de rétroaction intégrante du signal correspondant à la vitesse de lacet r sur le braquage des roues avant, on découple le mouvement de lacet et le mouvement latéral de l'essieu avant.

$\delta_L$

1  $\mathcal{F}_v$  $a_{vsoll}$  2  3  $k_p$  4  $w_v$  5  $u$  6  $\dot{\delta}_v = u$  $\delta_v$  7  $a_v$

−  −  −  $r$

8  $\dfrac{1}{v}$

$$\begin{bmatrix} \dot{a}_v \\ \dot{r} \end{bmatrix} = \begin{bmatrix} d_{11} & 0 \\ d_{21} & d_{22} \end{bmatrix} \begin{bmatrix} a_v \\ r \end{bmatrix} + \begin{bmatrix} 0 \\ d_{23} \end{bmatrix} \delta_v$$